# EUROPÄISCHE PATENTSCHRIFT

(11) **EP 1 194 887 B1**
(45) Veröffentlichungstag und Bekanntmachung des Hinweises auf die Patenterteilung: **09.04.2003**
(21) Anmeldenummer: 00943779.9
(22) Anmeldetag: 07.06.2000
(51) Int. Cl.: G06K 19/08, G06K 19/07

(54) **TYPENSCHILD MIT SPEICHEREINRICHTUNG**
TYPE PLATE COMPRISING A STORAGE DEVICE
PLAQUE SIGNALETIQUE A DISPOSITIF DE MEMOIRE

(30) Priorität: 29.06.1999 DE 19929766
(43) Veröffentlichungstag der Anmeldung: 10.04.2002
(73) Patentinhaber: Wacker Construction Equipment AG, 80809 München (DE)
(72) Erfinder: JORDAN, Peter, DECEASED (DE); MEYER-HESSING, Frank, D-30459 Hannover (DE); STEFFEN, Michael, D-82131 Stockdorf (DE); BORUN, Jean, D-80809 München (DE); RÖMING, Jürgen, D-85764 Oberschleissheim (DE)
(74) Vertreter: Hoffmann, Jörg Peter, Dr. Ing.
(86) Internationale Anmeldenummer: EP0005263
(87) Internationale Veröffentlichungsnummer: WO01003062

(56) Entgegenhaltungen:
- EP-A- 0 534 559
- EP-A- 0 754 406
- FR-A- 2 717 593

## Beschreibung

Die Erfindung betrifft gemäß dem Oberbegriff des Anspruchs 1 eine Maschine mit einem Typenschild als Träger für schriftliche und/oder grafische Information, der zugleich mit einer elektronischen Speichereinrichtung zusammengefasst ist.

Maschinen werden vom Hersteller mit einem dauerhaft befestigten Typen- bzw. Leistungsschild versehen, auf dem wichtige Informationen, meistens neben der Bezeichnung des Herstellers und gegebenenfalls einer Typenbezeichnung unter anderem das Herstellungsdatum, eine Maschinennummer, sowie relevante Leistungsdaten, wie Stromaufnahme, Leistungsabgabe oder Drehzahl vermerkt sind. Die Daten werden meistens in unzerstörbarer Schrift, etwa durch Prägung oder Gravur, auf dem Typenschild aufgebracht. Es kann auch ein Balkencode zur berührungslosen Erfassung der Daten mittels Laserscannern vorgesehen sein.

Es ist auch bereits bekannt. Maschinen mit Speichern zu versehen, die im Laufe der Benutzung der Maschine relevante Betriebs- bzw. Leistungsdaten, wie etwa die Laufzeit. Drehzahlen und Belastungen, speichern. Diese Speicher sind mit der Energieversorgung der Maschine mechanisch verbunden und je nach der konstruktiven Gestaltung der Maschine an jeweils geeignet erscheinenden Stellen angeordnet.

Die in solchen Speichern enthaltenen Daten ergänzen die Informationen auf den Leistungsschildern in einer vorteilhaften Weise, weil die Informationen auf dem Leistungsschild die Beschaffenheit der Maschine bei deren Fertigstellung beschreiben, während die Speicherdaten geeignet sind, Informationen über den Betrieb der Maschine nach deren Fertigstellung zu liefern, wie etwa Laufzeit, Drehzahlen und Belastung.

Ausgehend von der Überlegung, dass gerade diese zusätzlichen, während der Betriebszeit der Maschine anfallenden Informationen sich als besonders nützlich erweisen, wenn ein größerer Maschinenpark zu betreuen und zu warten ist, wie beispielsweise auch bei Firmen, die Maschinen vermieten oder verleihen, wurde es als nachteilig empfunden, dass es keine einheitliche Regelung darüber gibt, wo solche Speicher an der Maschine anzuordnen sind und wie die Daten ein- und auszulesen sind, sodass jeweils spezielle Kenntnisse und gegebenenfalls Hilfsmittel erforderlich sind, um Zugang zu den Daten zu erlangen.

Aus EP-A-0 534 559 ist eine Chipkarte mit einer Speichereinrichtung ohne eigene Spannungsversorgung bekannt, die einen separaten Eingang für in einer Vorrichtung generierte Datenübertragungssignale und einen Ein-/Ausgang für die berührungslose Datenaus- bzw. -eingabe mit Einrichtungen besitzt, wobei die Speichereinrichtung geeignet ist, die für den Speichereinlese- und -auslesevorgang sowie für das Speichern erforderliche Betriebsenergie ohne mechanische Kopplung berührungslos während des Betriebs von den Einrichtungen zu empfangen.

Es ist weiter aus EP-A-0 754 406 eine Transponder-Ohrmarke zur elektronischen Identifizierung von Tieren und aus FR-A-2 717 593 ein an Behältern anzubringendes Schild zur sowohl visuellen als auch elektronischen Identifizierung von Behältern z. B. hinsichtlich ihres Inhalts, ihrer Herkunft oder ihres Bestimmungsorts bekannt.

Der Erfindung liegt die Aufgabe zugrunde, ein relativ einfaches Mittel zu schaffen, um Maschinen, die mit einer Einrichtung zur Erfassung, Speicherung und Ausgabe maschinenbezogener Daten versehen sind, so gestalten zu können, dass der Auslesevorgang und gegebenenfalls der Einlesevorgang wesentlich erleichtert und ohne spezielle maschinenbezogene Kenntnisse durchführbar ist.

Die Lösung dieser Aufgabe ist in Patentanspruch 1 angegeben. Danach ist die Erfindung dadurch gekennzeichnet, dass die Speichereinrichtung einen separaten Eingang für in der Maschine generierte Datenübertragungssignale und einen Aus- und gegebenenfalls zweiten Eingang für die berührungs- bzw. drahtlose Datenaus- und gegebenenfalls -eingabe besitzt.

Somit wird erfindungsgemäß ein Typenschild funktionell mit einer Maschine derart verbunden, dass von der Maschine selbst generierte Daten während des Betriebs auf den Speicherchip des Typenschilds übertragen werden können. von dem sie mit standardisierten Mitteln leicht auslesbar sind.

Das flache, dünne Typenschild mit relativ geringer Größe ist leicht an einer für seine Ablesung geeigneten Stelle anzubringen und befindet stch in aller Regel auch an einem solchen Platz, weshalb es keine Mühe bereitet. den Speicherchip zu nutzen und jederzeit Informationen beispielsweise über den Zustand der Maschine oder deren Einbindung in eine betriebliche Organisationsstruktur zu erhalten, wie etwa Angaben über die Betriebsdauer, die Belastung bzw. die Drehzahlen und/oder die Einhaltung von Wartungsintervallen, oder aber die Zuordnung der Maschine zu einem bestimmten Betriebsbereich oder -standort. Von besonderer Bedeutung kann dies für Firmen sein, die Maschinen verleihen oder vermieten, wobei die Zuverlässigkeit der Information durch geeignete, an sich bekannte Maßnahmen zur Beschränkung des Zugriffs auf die gespeicherten Daten sichergestellt werden kann.

Vorzugsweise ist der Speicherchip derart geschaltet, dass er keine eigene Spannungsversorgung bzw. keinen Energiespeicher aufweist. sondern dass der Speicherchip geeignet ist, die für den Speichereinlese- und -auslesevorgang erforderliche Energie von Geräten zu empfangen, die vom Typenschild getrennt sind. Bei solchen Geräten kann es sich um Transponder oder andere magnetische Datenübertragungseinrichtungen handeln, die vorzugsweise berührungslos bzw. drahtlos arbeiten. um die Sender oder Empfänger vollständig gegenüber der Umgebung abkapseln zu können. Die Sender bzw. Empfänger weisen dann keine nach außen führenden Kontakte oder Leitungen auf. was insbesondere beim Einsatz der Maschinen in rauher Umgebung, z.B. auf Baustellen vorteilhaft ist.

Nach einer besonders zweckmäßigen Ausgestaltung ist der Speicherchip geeignet. die Betriebsenergie von den Geräten zum Ein- und/oder Auslesen von Daten in bzw. aus dem Speicherchip bei deren Betrieb zu empfangen.

Je nach Wunsch oder Bedarf bzw. abhängig von der Ausstattung der mit dem Typenschild versehenen Maschine können Daten gegebenenfalls nur von außerhalb der Maschine mittels eines geeigneten Eingabegeräts eingegeben werden, oder es können Daten auch innerhalb der Maschine durch geeignete Signalgeber gewonnen und auf den Speicherchip übertragen werden, wozu gegebenenfalls innerhalb der Maschine in geeigneter räumlicher Zuordnung zum Typenschild ein Sender für die Energie- und Datenübertragung angeordnet sein kann.

Eine weitere vorteilhafte Ausführungsform besteht darin, daß der Speicherchip einen separaten Eingang für in der Maschine generierte Datenübertragungssignale und einen zweiten Aus- und gegebenenfalls Eingang für die berührungs- bzw. drahtlose Datenaus- und gegebenenfalls -eingabe besitzt.

Gegenstand der Erfindung ist auch eine Maschine mit einem erfindungsgemäßen Typenschild. bei welcher dem Typenschild innerhalb der Maschine ein Sender für Daten und Betriebsenergie in einer deren Übertragung auf die Speichereinrichtung ermöglichenden räumlichen Position zugeordnet ist.

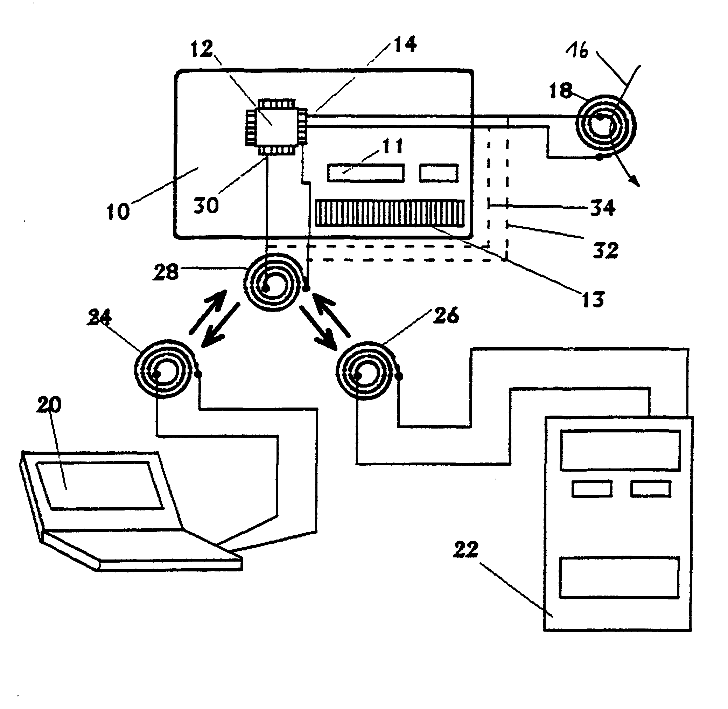

Anhand eines in der Zeichnung dargestellten Ausführungsbeispiels der Erfindung wird diese näher erläutert.

Die Zeichnung zeigt schematisch ein erfindungsgemäß ausgebildetes Typenschild und seine Einbindung in ein System von Datenein- und -ausgabeeinrichtungen.

Das oftmals auch als Leistungsschild bezeichnete Typenschild üblicher Art ist mit 10 gekennzeichnet und weist verschiedene Felder 11 für die Beschriftung im z.B. Präge- oder Gravurverfahren auf, wobei auch ein Strichcode 13 aufgebracht werden kann. In dieses Typenschild ist ein als Speichereinrichtung dienender elektronischer Speicherchip 12 integriert, der keine eigene Energieversorgung aufweist und sich dazu eignet, Daten zu speichern. Zur Eingabe oder Ausgabe der Daten sind Einrichtungen oder Geräte erforderlich, die geeignet sind, bei ihrer Anwendung dem Speicherchip 12 die erforderliche Energie zuzuführen.

Im gezeigten Beispiel ist die selbst nicht gezeigte, das Leistungsschild tragende Maschine mit Signalgebern versehen, die geeignet sind, relevante Betriebsdaten in Signale umzuwandeln, die an einen Dateneingang 14 des Speicherchips 12 übertragen werden können. Zu diesem Zweck werden die symbolisch durch 16 dargestellten Signale auf einen mit dem Dateneingang 14 verbundenen Empfänger 18 übertragen, der zugleich der Energieversorgung des Speicherchips 12 während der Datenübertragung aus der Maschine dient. Gegebenenfalls kann der Empfänger 18 für berührungsfreie Daten- und Energieübertragung auch durch eine dauerhafte Leitungsverbindung, d. h. durch eine feste Verschaltung ersetzt sein.

Zum Auslesen der im Speicherchip 12 gespeicherten Daten, aber auch zum Einlesen von Daten, die innerhalb der Maschine nicht gewonnen werden können und von außen zuzuführen sind, z.B. Daten über den Einsatzort der Maschine oder über ein bestehendes Mietverhältnis, oder zum Einlesen aller zu speichernden Daten, falls die Maschine nicht mit einem Signalgenerator oder dergl. versehen ist, können kompatible Geräte, etwa in Form eines Laptops 20 oder eines Betriebsstundenzählers 22 verwendet werden, die jeweils mit einem Sender/Empfänger 24 bzw. 26 versehen sind, der geeignet ist, berührungslos Daten und Betriebsenergie auf einen mit dem Speicherchip 12 verbundenen Sender/Empfänger 28 zu übertragen bzw. Daten von dort zu empfangen. Dieser Sender/Empfänger 28 ist mit einem zweiten Dateneingang und -ausgang 30 am Speicherchip 12 verbunden.

Der Speicherchip 12 kann so geschaltet sein, daß eine willkürliche Dateneingabe über den Sender/Empfänger 28 nur beim Erfüllen einer vorgegebenen Bedingung, z. B. durch Eingeben eines Sicherheitscodes, möglich ist, um eine Datenmanipulation durch Unbefugte zu verhindern. Gleichermaßen kann auch eine Abfragebefugnis vorgegeben sein.

Wie die Leitungsverbindungen 32 und 34 symbolisieren, kann auch eine Verbindung zwischen dem Dateneingang 14 und dem Sender/Empfänger 28 bestehen.

## Patentansprüche

1. Maschine mit einem Typenschild (10) als Träger für schriftliche und/oder grafische Information (11, 13), der zugleich mit einer elektronischen Speichereinrichtung (12) zusammengefasst ist, **dadurch gekennzeichnet, dass** die Speichereinrichtung (12) einen separaten Eingang (14) für in der Maschine generierte Datenübertragungssignale und einen Aus- und gegebenenfalls zweiten Eingang (30) für die berührungs- bzw. drahtlose Datenaus- und gegebenenfalls -eingabe besitzt.

2. Maschine nach Anspruch 1, **dadurch gekennzeichnet, dass** die Speichereinrichtung (12) keine eigene Spannungsversorgung aufweist.

3. Maschine nach Anspruch 2, **dadurch gekennzeichnet, dass** die Speichereinrichtung (12) geeignet ist, die für den Speichereinlese- und -auslesevorgang sowie für das Speichern erforderliche Betriebsenergie von Einrichtungen (20, 22) zu empfangen, die vom Typenschild getrennt vorgesehen sind.

4. Maschine nach Anspruch 3, **dadurch gekennzeichnet, dass** die Speichereinrichtung (12) geeignet ist, die Betriebsenergie ohne mechanische Kopplung berührungslos oder drahtlos zu empfangen.

5. Maschine nach einem der Ansprüche 3 oder 4, **dadurch gekennzeichnet, dass** die Speichereinrichtung (12) geeignet ist, die Betriebsenergie von den Einrichtungen (20, 22) zum Ein- und/oder Auslesen von Daten in bzw. aus der Speichereinrichtung bei deren Betrieb zu empfangen.

6. Maschine nach einem der Ansprüche 1 bis 5, **dadurch gekennzeichnet, dass** eine Verbindung (32, 34) zwischen einem separaten Eingang (14) und einem Sender/Empfänger (28) des Aus- und gegebenenfalls zweiten Eingangs (30) besteht.

7. Maschine nach Anspruch 2 oder einem der darauf folgenden, auf Anspruch 2 bezogenen Ansprüche, **dadurch gekennzeichnet, dass** dem Typenschild (10) innerhalb der Maschine ein Sender für Daten und Betriebsenergie in einer deren Übertragung auf die Speichereinrichtung (12) ermöglichenden räumlichen Position zugeordnet ist.

## Claims

1. Machine with a type plate (10) as a carrier of written and/or graphical information (11, 13), which is also combined with an electronic storage device (12), **characterised in that** the storage device (12) has a separate input (14) for data transmission signals generated in the machine and an output and possible second input (30) for contact-free or wireless data output and - if appropriate - input.

2. Machine according to claim 1, **characterised in that** the storage device (12) does not have its own voltage supply.

3. Machine according to claim 2, **characterised in that** the storage device (12) is able to receive; from-devices (20, 22), the operating power which is required for the storage read-in and read-out process and for storage, which devices (20, 22) are provided separate from the type plate

4. Machine according to claim 3, **characterised in that** the storage device (12) is able to receive the operating power in a contact-free or wireless manner without mechanical coupling.

5. Machine according to one of claims 3 or 4, **characterised in that** the storage device (12) is able to receive the operating power from the devices (20, 22) in order to read-in and/or read-out data into or out of the storage device during operation thereof.

6. Machine according to one of claims 1 to 5, **characterised in that** a connection (32, 34) exists between a separate input (14) and a transmitter/receiver (28) of the output and possible second input (30).

7. Machine according to claim 2 or one of the following claims referring to claim 2, **characterised in that** inside the machine a transmitter for data and operating power in a spatial position enabling transmission thereof to the storage device (12) is allocated to the type plate (10).

## Revendications

1. Machine avec une plaque signalétique (10) comme support d'informations écrites et/ou graphiques (11, 13), qui est réunie à un dispositif à mémoire électronique (12), **caractérisée en ce que** le dispositif à mémoire (12) possède une entrée séparée (14) pour des signaux de transmission de données générés dans la machine, et une sortie et éventuellement une deuxième entrée (30) pour la sortie - et éventuellement ― la saisie de données sans contact ou sans fil.

2. Machine selon la revendication 1, **caractérisée en ce que** le dispositif à mémoire (12) ne comporte pas d'alimentation en tension propre.

3. Machine selon la revendication 2, **caractérisée en ce que** le dispositif à mémoire (12) est apte à recevoir l'énergie de fonctionnement nécessaire à l'opération d'enregistrement dans la mémoire et à l'opération de sélection dans celle-ci, ainsi qu'à la mémorisation, de dispositifs (20, 22) qui sont prévus séparés de la plaque signalétique.

4. Machine selon la revendication 3, **caractérisée en ce que** le dispositif à mémoire (12) est apte à recevoir sans contact ou sans fil l'énergie de fonctionnement, sans accouplement mécanique.

5. Machine selon la revendication 3 ou 4, **caractérisée en ce que** le dispositif à mémoire (12) est propre à recevoir l'énergie de fonctionnement des dispositifs (20, 22) pour l'enregistrement et/ou l'extraction de données dans le ou depuis le dispositif à mémoire, pendant son fonctionnement.

6. Machine selon l'une des revendications 1 à 5, **caractérisée en ce qu'**il existe une liaison (32, 34) entre une entrée séparée (14) et un émetteur/récepteur (28) de la sortie et éventuellement de la deuxième entrée (30).

7. Machine selon la revendication 2 ou l'une des revendications suivantes rattachée à la revendication 2, **caractérisé en ce qu'**à la plaque signalétique (10) est affecté, à l'intérieur de la machine, un émetteur pour des données et l'énergie de fonctionnement dans une position spatiale permettant leur transmission au dispositif à mémoire (12).
